# EUROPEAN PATENT APPLICATION

(11) **EP 0 637 122 A1**
(43) Date of publication of application: **01.02.1995**
(21) Application number: 94108967.4
(22) Date of filing: 10.06.1994
(51) Int. Cl.: H02M 5/12, G05F 1/14, H02P 13/06, H01F 30/02

(54) **An apparatus and method of controlling a step-down ratio of an autotransformer in response to an input voltage**

(30) Priority: 10.07.1993 JP 193982/93; 05.10.1993 JP 273160/93
(71) Applicant: WORLD LIMITED CO., LTD, Toshima-ku, Tokyo (JP)
(72) Inventor: Nasuno, Masumi, Tokyo (JP); Ogasawara, Makoto, Kawaguchi-shi, Saitama (JP); Sato, Kiyosumi, Tokyo (JP)
(74) Representative: VOSSIUS & PARTNER

(57) **Abstract**

In order to effectively reduce consumer's electrical power consumption, an input voltage of a step-down autotransformer (2) is detected by a switch controller (4). Subsequently, the switch controller (4) compares the detected input voltage (VRN) with at least one reference voltage and generates at least one comparison result. Based on the comparison result, the switch controller (4) controls at least one switch, which is operatively coupled to a secondary winding of the autotransformer (2), such as to change the step-down ratio of the autotransformer.

## Description

The present invention relates generally to an apparatus and method of effectively adjusting a step-down ratio of an autotransformer in response to an input voltage applied thereto, and more specifically to such an apparatus and method by which electric power costs paid by consumers can effectively be reduced by preventing the autotransformer from supplying loads thereof with unnecessarily high voltages.

It is highly desirable to reduce consumers' electric power consumption in view of effective usage of finite resources on the earth and also environmental preservation. Furthermore, it is both practically and economically attractive to achieve effective reduction of consumers' electricity consumption if such reduction does not induce malfunction in consumers' appliances.

Small or medium sized power consumers, such as super-markets, convenience stores, business offices and usual homes, directly apply ac (alternate current) voltage, supplied from an electric power company, to their electric appliances. In such an instance, power saving is achieved using the unsophisticated technique of diligently turning off various appliances when their use is not essential.

It is known that a nominal voltage supplied to a consumer's electric appliance can vary over an operation range within which a manufacture guaranties its operation. Therefore, an alterative way to implement the power saving is to step down, by a predetermined value, the input ac voltage which is applied to the consumers' appliances. However, if an ac input voltage is abnormally lowered even temporarily due to unexpected disturbance, it is no longer possible to assure correct operations of the appliances.

It is therefore essential, in the event that the above type of voltage reduction is used for power saving, that the appliances be protected from malfunction due to unexpected low voltages.

It is an object of the present invention to provide an apparatus for detecting an input voltage and automatically controlling a step-down ratio of an autotransformer in response to the voltage detection.

Another object of the present invention is to provide a method of detecting an input voltage and automatically controlling a step-down ratio of an autotransformer in accordance with the voltage detection.

In brief, the above objects are achieved by an improved technique wherein in order to effectively reduce consumer's electrical power consumption, an input voltage of a step-down autotransformer is detected by a switch controller. Subsequently, the switch controller compares the detected input voltage with at least one reference voltage and generates at least one comparison result. Based on the comparison result, the switch controller controls at least one switch, which is operatively coupled to a secondary winding of the autotransformer, such as to change the step-down ratio of the autotransformer.

More specifically a first aspect of the present invention resides in a method of controlling an output voltage of a step-down autotransformer in response to an input voltage applied thereto. The method comprises the steps of: (a) detecting said input voltage which is applied to a primary winding of said step-down autotransformer; (b) comparing said input voltage with a reference voltage and outputting a comparison result; and (c) controlling a switch in-response to said comparison result, said switch being arranged such as to render said step-down autotransformer inoperative if said switch is open, whereby said output voltage is controlled in response to said input voltage.

A second aspect of the present invention residers in a method of controlling a step-down ratio of an autotransformer in response to an input voltage applied thereto. The method comprises the steps of: (a) detecting said input voltage applied to a primary winding of said autotransformer; (b) comparing said input voltage with first and second reference voltages and outputting first and second comparison results; and (c) controlling first and second switches in response to said first and second comparison results, said first switch being coupled to a given winding point of a secondary winding of said autotransformer, said second switch being coupled to a remote end of said secondary winding with respect to said primary winding.

A third aspect of the present invention resides in a method of conserving electrical power, which method comprises the steps of: (a) interposing a step-down autotransformer between a source of voltage and a load; (b)detecting the voltage from said source; (c) varying an output voltage of said step-down autotransformer in response to the detected voltage; and (d) preventing the output voltage of said step-down autotransformer from falling below a predetermined voltage.

A fourth aspect of the present invention resides in an apparatus of conserving electrical power. The apparatus comprises a step-down autotransformer having a primary winding for receiving an input voltage from a voltage source. Further, the autotransformer has a secondary winding coupled to a load. A switch controller detects said input voltage and compares said input voltage with a reference voltage. The switch controller opens a switch such as to render said step-down autotransformer inoperative if said input voltage falls below said reference voltage.

A fifth aspect of the present invention resides in an apparatus of conserving electrical power, comprising: a step-down autotransformer having a primary winding for receiving an input voltage from a voltage source and having a secondary winding coupled to a load; a switch controller, said switch controller detecting said input voltage and comparing said input voltage with first and second reference voltages; and a first switch coupled to a given point included in said secondary winding, said first switch being controlled by said switch controller such as to selectively electrically inserting one portion of said secondary winding into said step-down transformer; and a second switch coupled to a remote end of said secondary winding with respect to said primary winding, said second switch selectively electrically inserting the other portion of said secondary winding into said step-down transformer.

The features and advantages of the present invention will become more clearly appreciated from the following description taken in conjunction with the accompanying drawings in which like elements are denoted by like reference numerals and in which:
Fig. 1 is a block diagram schematically showing an first embodiment of the present invention as applied to a two-wire, single-phase consumer's power line;
Fig. 2 is a block diagram showing in detail one block of Fig. 1;
Fig. 3 is a diagram showing in detail blocks in Fig. 1 together with portions associated therewith;
Fig. 4 is a timing chart which depicts the operation which characterizes the first embodiment;
Fig. 5 is a block diagram showing a second embodiment of the present invention;
Fig. 6 is a block diagram showing in detail one block of Fig. 5;
Fig. 7 is a diagram showing in detail blocks in Fig. 5 together with portions associated therewith;
Fig. 8 is a block diagram showing a third embodiment of the present invention; and
Fig. 9 is a diagram schematically showing a fourth embodiment of the present invention.

An apparatus according to the present invention is usually provided immediately downstream of a consumer's wattmeter. That is, it is located between the wattmeter and a consumer's electric appliance(s), the reason for which comes from the fact that an electric power company supervises or is responsible for power supply to the consumer's wattmeter.

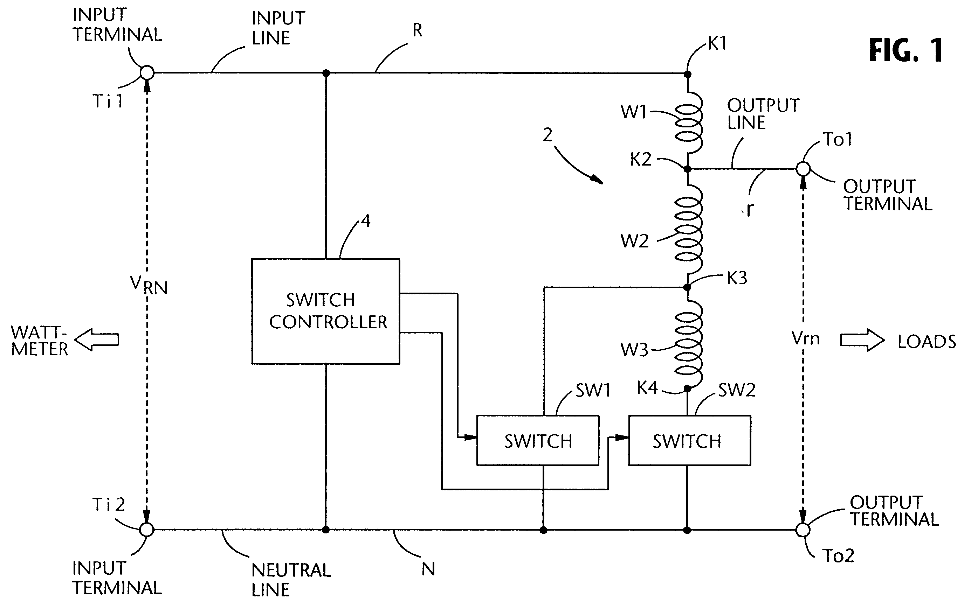

Fig. 1 schematically illustrates a first embodiment of the present invention in block diagram form.

The first embodiment is applied to a single-phase, two-wire type power distribution system.

In Fig. 1, an autotransformer 2 includes a continuous winding (viz., a primary winding) which is tapped at junctions K2 and K3 in this particular case, and which is wound on a core (not shown) of iron or other type of ferromagnetic material. As shown, the primary winding consists of three winding portions W1-W3. A secondary winding consists of the winding portions W2 and W3 common to the primary. As is well known in the art, the winding portion W1 is called a series winding while the winding portions W2 and W3 is termed a common winding.

The arrangement of Fig. 1 further includes a first switch SW1 between the junction K3 and a neutral line N which is grounded (although not shown in Fig. 1). On the other hand, a second switch SW2 is coupled between the neutral line N and one terminal K4 of the winding portion W3. The neutral line N extends between a primary (viz., input) terminal Ti2 and a secondary (viz., output) terminal To2. On the other hand, an input line R extends from the other primary terminal Ti1 to one terminal K1 of the winding portion W1. An output terminal To1 is coupled to the junction K2 via an output line r. An output of the autotransformer 2, depicted by Vrn, appears at the output terminals To1 and To2.

A switch controller 4 is provided to detect an input ac (alternating current) voltage V_{RN} appearing at the primary terminals Ti1 and Ti2. The switch controller 4 is responsive to the input ac voltage V_{RN} and controls the operations of the switches SW1 and SW2 as will be discussed later.

It is assumed, in the present disclosure, that an electric power company supplies its subscribers or consumers with an ac voltage (viz., voltage V_{RN}) of 100V (effective value). Each of the consumers' electric appliances with a rated voltage of 100V is manufactured such as to correctly operate in a case of a change in power distribution. That is, usual consumers' appliances are able to normally operate in a range of 101V±10% (for example). On the other hand, an electric power company usually supplies the consumers with a voltage exceeding 100V in view of undesirable voltage drops in a power supply line from the power generator to the consumer's wattmeter.

The present invention takes advantage of the fact that an electric company usually supplies a power voltage in excess of the contract voltage (100V in this disclosure).

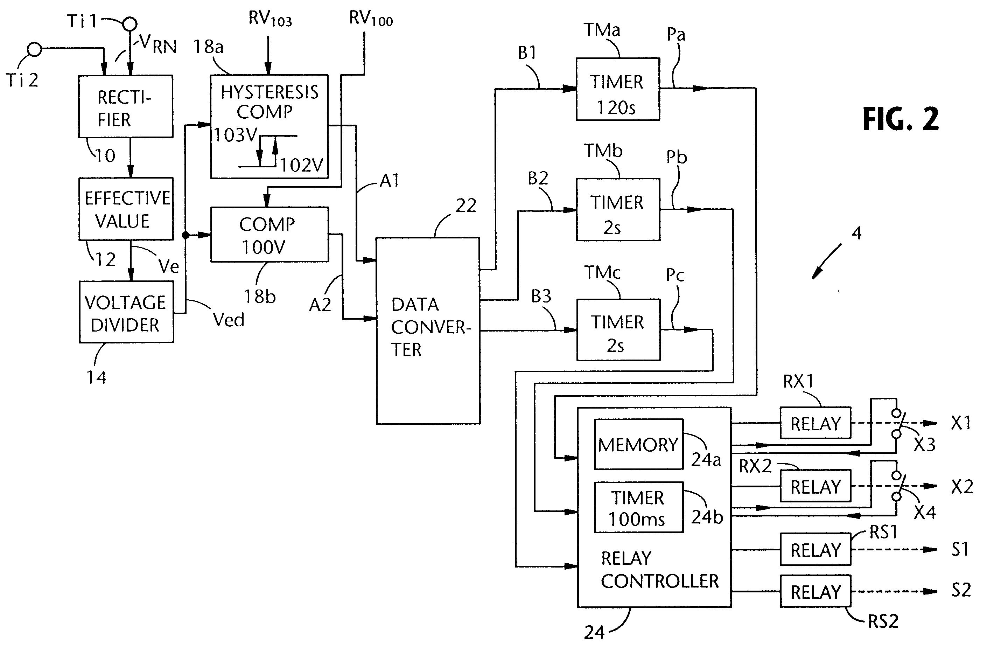

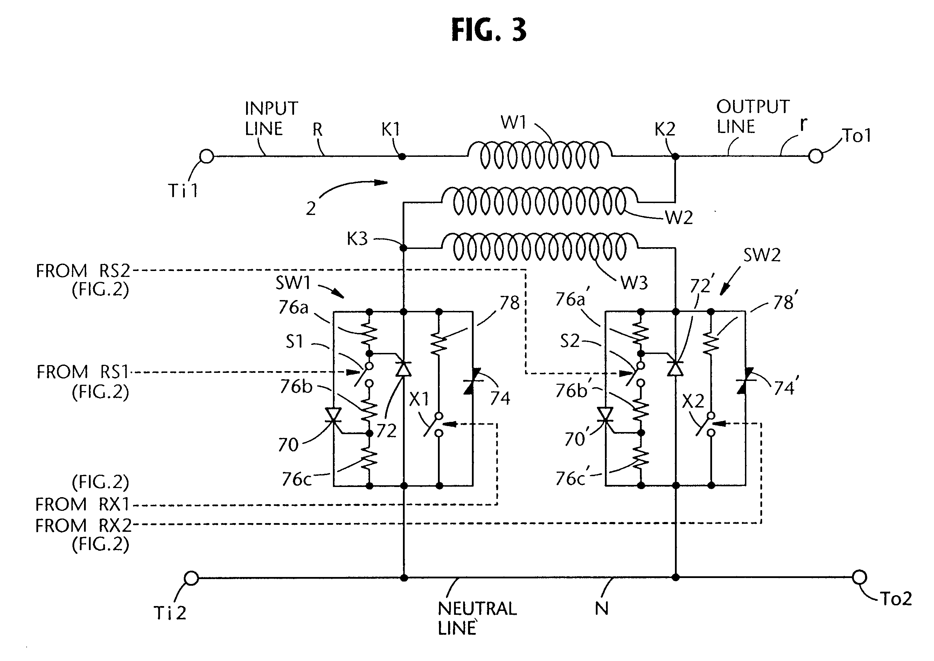

Reference is made to Fig. 2 wherein the arrangement of the switch controller 4 is shown in detail in block diagram form.

A rectifier 10 receives the input voltage V_{RN} and outputs a rectified input voltage which is fed to an effective value determiner 12. The effective value of the input voltage (denoted by Ve), outputted from the determiner 12, is applied to a voltage divider 14 which outputs one hundredth the effective value applied thereto (merely for example). Thus, if the effective value of the input voltage V_{RN} is 104V then the output of the voltage divider (denoted by Ved) becomes 1.04V. The voltage divider 14 is provided to proportionally reduce the effective value Ve of the input voltage V_{RN} to a value which can be treated at succeeding ICs (Integrated Circuit). The output Ved of the divider 14 is applied to a hysteresis comparator 18a and a comparator 18b.

Although not shown in Fig. 2, the switch controller 4 includes a conventional type constant voltage source which receives the input voltage V_{RN} and generates two reference dc voltages RV₁₀₃ and RV₁₀₀. These reference voltages RV₁₀₃ and RV₁₀₀ are respectively applied to the comparators 18a and 18b. The values of the reference voltages RV₁₀₃ and RV₁₀₀ should be determined in view of the above mentioned dividing ratio (1:100) of the voltage divider 14. Thus, in the first embodiment, the reference voltages RV₁₀₃ and RV₁₀₀ are respectively 1.03V and 1.00V.

The hysteresis comparator 18a has a hysteresis width of 0.01V which corresponds to a potential difference of 1V when converted into the effective value of the input voltage V_{RN}. Further, the reference voltages RV₁₀₃ and RV₁₀₀ corresponds to the effective values 103V and 100V of the input voltage V_{RN}. Thus, the hysteresis comparator 108a includes notations "103V" and "102V" in the block thereof while the comparator 18b includes a notation "100V" in the block thereof.

Merely for the convenience of description, the operations of the comparators 108a and 108b will be discussed in terms of the effective voltage Ve (viz., the output of the block 12), the imaginary reference voltages 103V and 100V instead of Ved, RV₁₀₃ (=1.03V) and RV₁₀₀ (=1.00V).

If the voltage Ve is more than 103V and then falls below 102V, the hysteresis comparator 18a produces an output A1 which assumes a logic level "1" if Ve>102V and a logic level "0" if Ve≦102V. Contrarily, if the voltage Ve is below 102V and then rises more than 103V, the output A1 of the comparator 18a assumes a logic level "0" if Ve<103V and a logic level "1" if Ve≧103V.

On the other hand, the comparator 18b outputs A2 which assumes a logic level "1" if Ve>100V and a logic level "0" if Ve≦100V.

The outputs A1 and A2 of the comparators 18a and 18b are applied to a data converter 22. It is understood that there are three possible combinations (1)-(3) with respect to the outputs A1 and A2, as listed below.

| | (1) | (2) | (3) |
|---|---|---|---|
| A1 | 1 | 0 | 0 |
| A2 | 1 | 1 | 0 |

The data converter 22 produces three logic signals B1, B2 and B3 which are respectively applied to timers TMa, TMb and TMc. If the converter 22 receives the above mentioned logic level combination (1) (viz., A1=1 and A2=1),
B1 = 1
B2 = 0
B3 = 0
On the other hand, if the converter 22 receives the logic level combination (2), then
B1 = 0
B2 = 1
B3 = 0
Further, if the converter 22 receives the logic level combination (3), then
B1 = 0
B2 = 0
B3 = 1

The timer TMa issues a pulse Pa (logic level "1") with a very short time duration (for example) only if the signal B1 achieves and maintains a logic level "1" for a period of 120 seconds (for example). On the other hand, the timer TMb issues a pulse Pb (logic level "1" (for example)) only if the signal B2 achieves and maintains a logic level "1" for a period of 2 seconds (for example). In a similar manner, the timer TMc generates a pulse Pc (logic level "1") only if the signal B3 achieves and maintains a logic level "1" for 2 seconds.

The reason why the timers TMa-TMc are provide will be discussed later.

The timers TMa-TMc each is an IC timer which utilizes the charging and discharging of a condenser. These timers are commercially available (for example, device No. M51848 manufactured by Mitsubishi Electric Company).

As shown in Fig. 2, a relay controller 24, which includes a memory 24a and a timer 24b, is arranged to receive the pulses Pa-Pc selectively applied thereto. The memory 24a stores information of which pulse (viz., Pa, Pb or Pc) has been applied to the relay controller 24. The information once stored is replaced by the next information of pulse occurrence. The relay controller 24 selectively controls relays RX1, RX2, RS1 and RS2 coupled thereto.

The operations of the relay controller 24, together with a plurality of relays RX1, RX2, RS1 and RS2 and relay contacts X3 and X4 all coupled to the controller 24, will be discussed in detail later.

Fig. 3 is a diagram showing the details of the switches SW1 and SW2 (Fig. 1) provided between the autotransformer 2 and the neutral line N. Fig. 3 corresponds to Fig. 1 except that the switch controller 4 is omitted in Fig. 3.

The arrangement of each of the switches SW1 and SW2 shown in Fig. 3, is well known in the art and hence the descriptions thereof will only be briefly discussed.

As shown in Fig. 3, the switch SW1 includes two SCRs (Silicon Controlled Rectifier) 70 and 72 coupled in parallel. The switch SW1 further includes relay contacts S1, which is coupled in series with resistors 76a, 76b and 76c, controls ON/OFF operations of the SCRs 70 and 72. A series circuit, which consists of relay contacts X1 and a resistor 78, is coupled in parallel with the SCRs 70, 72 and a varistor 74.

The relay contacts X1 is closed, immediately before the SCRs 70 and 72 are rendered OFF, for the purposes of protecting them. The varistor 74 prevents the SCRs 70 and 72 from being electrically destroyed due to a possible high voltage(s) which may otherwise be applied across them. Providing the contacts X1 and the varistor 74 is well known in the art and thus, further discussion thereof is deemed redundant and is accordingly omitted.

Merely for the sake of simplifying the disclosure, the arrangement of the switch SW2 shown in Fig. 3 will not be described in that the switch SW2 is configured in exactly the same manner as SW1. However, in order to distinguish between the elements of the switches SW1 and SW2, each of the elements of SW2 is depicted by like numeral with a prime except for relay contacts S2 and X2 which respectively correspond to the contacts S1 and X1.

It is assumed that the number of turns of the winding portion W1 is 7 (seven) while the number of turns of each of the winding portions W2 and W3 is 117. The voltage drop in each of the above mentioned three combinations (1)-(3) will be described.

Firstly, in the case of the combination (1) (viz., B=1, B=0, B=0), the switch SW1 is closed while SW2 remains open. Thus, the voltage drop of the input voltage V_{RN} across the winding portion W1 is nearly equal to 6V (103V (for example) × 7/124). It is therefore understood that the output voltage of the autotransformer 2 is reduced to about 97V (= 103V-6V). This voltage reduction mode will be called "6V drop mode".

Secondary, if the combination (2) (viz., B1=0, B2=1 and B3=0) takes place, the switch SW1 is open while the switch SW2 is closed. As a result, the voltage drop of the input voltage V_{RN} across the winding portion W1 is nearly equal to 3V (101V (for example) × 7/241). Thus, the output voltage of the autotransformer 2 is reduced to about 98V (= 101V-3V). This voltage reduction mode will be termed "3V drop mode".

Lastly, if the combination (3) (viz., B1=0, B2=0 and B3=1) occurs, the switches SW1 and SW2 are both open. Therefore, the autotransformer 2 does not work. The voltage drop of the input voltage V_{RN} across the winding portion W1 is negligibly small in this case. Therefore, the input voltage V_{RN} directly appears at the output terminals To1 and To2. That is, if the input voltage V_{RN} is 100V then the output voltage is very, very nearly equal to 100V. This zero voltage reduction mode will be termed "direct-couple mode".

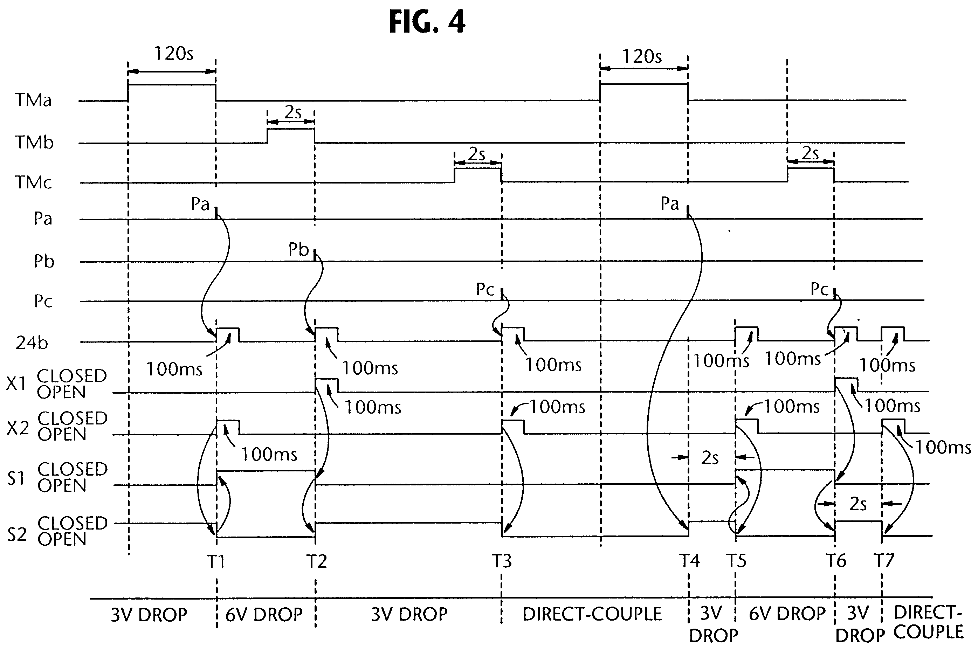

The operations of the relay controller 24 will be discussed with reference to Figs. 2, 3 and 4 wherein Fig. 4 is a timing chart which depicts the operation which characterizes the first embodiment.

It is assumed that the autotransformer 2 is in the 3V drop mode wherein the switches SW1 and SW2 are respectively OFF and ON. In more specific terms, relay contacts S2 is closed while all the remaining relay contacts S1, X1 and X2 are open. In this instance, the memory 24a stores the information that the pulse Pb has been applied to the relay controller 24. In other words, the information stored in the memory 24a indicates that the apparatus is in the 3V drop mode.

The controller 24, in response to the pulse Pa (viz., 6V drop mode instruction), checks to see if the information stored in the memory 24a indicates the direct-couple mode. Further, the controller 24, in response to the pulse Pc (viz., direct-couple drop mode instruction), checks to see if the information stored in the memory 24a indicates the 6V drop mode.

During the 3V drop mode, if the timer TMa issues the pulse Pa at a time point T1 in order to shift the apparatus operation mode from the 3V drop mode to the 6V drop mode. The relay controller 24, in response to the pulse Pa, checks to see if the information stored in the memory 24a indicates the direct-couple mode. In this case, the mode information in the memory 24a does not indicate the direct-couple mode and thus, the relay controller 24 immediately actuates the relay RX2 for closing the relay contacts X2 during 100ms by way of the timer 24b. Upon the relay contacts X2 being closed, the relay contacts X4 which is ganged with X2 is also closed. Therefore, the relay controller 24 is able to confirm that the relay contacts X2 has definitely been closed. Subsequently, the controller 24 drives the relay RS2 thereby to open the relay contacts S2. Immediately thereafter, the controller 24 closes the contacts S1 by way of the relay RS1. In this manner, the apparatus is transferred from the 3V drop mode into the 6V drop mode. This mode change from the 3V drop mode to the 6V drop mode is represented in the vicinity of the time point T1 (see Fig. 4).

Contrarily, if the timer TMc issues the pulse Pc (at a time point T3) in order to transfer the apparatus operation mode from the 3V drop mode to the direct-couple mode. The relay controller 24, in response to the pulse Pc, checks to see if the information stored in the memory 24a indicates the 6V drop mode. In this case, the mode information in the memory 24a does not indicate the 6V drop mode and thus, the relay controller 24 immediately actuates the relay RX2 for closing the contacts X2 during 100ms by way of the timer 24b. Upon the contacts X2 being closed, the contact X4 which is ganged with X2 is also closed. Therefore, the relay controller 24 is able to confirm that the contacts X2 has definitely been closed. Subsequently, the controller 24 drives the relay RS2 thereby to open the contacts S2. It should be noted that the contacts S1 remains open in the 3V drop mode. In this manner, the apparatus is transferred from the 3V drop mode into the direct-couple mode by rendering both SW1 and SW2 open. This mode change from the 3V drop mode to the direct-couple mode is represented in the vicinity of the time point T3 in Fig. 4.

During the 6V drop mode, if the timer TMb issues the pulse Pb at a time point T2 in order to render the apparatus operation mode from the 6V drop mode to the 3V drop mode. In this case, the relay controller 24 does not check to see the information stored in the memory 24a. The relay controller 24 immediately actuates the relay RX1 for closing the contacts X1 during 100ms by way of the timer 24b. Upon the contacts X1 being closed, the contacts X3 which is ganged with X1 is also closed. Therefore, the relay controller 24 is able to confirm that the contacts X1 has definitely been closed. Subsequently, the controller 24 drives the relay RS1 thereby to open the contacts S1. Immediately thereafter, the controller 24 closes the contacts S2 by way of the relay RS2. In this manner, the apparatus is transferred from the 3V drop mode into the 6V drop mode. This mode change from the 6V drop mode to the 3V drop mode is represented in the vicinity of the time point T2 (see Fig. 4).

On the other hand, if the timer TMc issues the pulse Pc in order to transfer the apparatus operation mode from the 6V drop mode to the direct-couple mode, at time point T6 in Fig. 4. The relay controller 24, in response to the pulse Pc, checks to see if the information stored in the memory 24a indicates the 6V drop mode. In this case, the mode information in the memory 24a indicates the 6V drop mode and thus, the relay controller 24 immediately actuates the relay RX1 for closing the contacts X1 during 100ms by way of the timer 24b. Upon the contacts X1 being closed, the contacts X3 which is ganged with X1 is also closed. Therefore, the relay controller 24 is able to confirm that the contacts X1 has definitely been closed. Subsequently, the controller 24 drives the relay RS1 thereby to open the contacts S1. Immediately thereafter, the controller 24 drives the relay RS1 thereby to close the contacts S2. Following this, the switch controller 24 closes the contacts S2 by driving the relay RS2. Thus, the apparatus mode is transferred to the 3V drop mode. After 2 seconds (for example) elapses, the controller 24 actuates the relay RX2 thereby to close the contacts X2 after which the controller 24 opens the contacts S2 (at a time point T7). In this manner, the apparatus is transferred from the 6V drop mode into the direct-couple mode by way of the temporal 3V drop mode.

As mentioned above, the 6V drop mode is shifted, via the 3V drop mode, to the direct-coupled mode, the reason for which is to prevent an abrupt voltage change (viz., voltage drop in this case) from being applied to the consumer's appliances.

Furthermore, if the timer TMa issues the pulse Pa in order to transfer the apparatus operation mode from the direct-couple mode to the 6V drop (at a time point T4). The relay controller 24, in response to the pulse Pa, checks to see if the information already stored in the memory 24a indicates the direct-couple mode. In this case, the mode information in the memory 24a indicates the direct-couple mode and thus, the relay controller 24 immediately actuates the relay RS2 for closing the contacts S2. Thus, the apparatus is transferred to the 3V drop mode. After 2 seconds (for example) elapses, the controller 24 actuates the relay RX2 thereby to close the contacts X2 (at a time point T5). Upon the contacts X2 being closed, the contacts X4 which is ganged with X2 is also closed. Therefore, the relay controller 24 is able to confirm that the contacts X2 has definitely been closed. Subsequently, the controller 24 drives the relay RS2 thereby to open the contacts S2. Immediately thereafter, the controller 24 closes the contacts S1 by way of the relay RS1. In this manner, the apparatus is transferred from the direct-coupled mode into the 6V drop mode via the temporal 3V drop mode.

As mentioned above, the direct-couple mode is shifted, via the 3V drop mode, to the 6V drop mode, the reason for which is to prevent an abrupt voltage change (viz., voltage rise in this case) from being applied to the consumer's appliances.

As above mentioned, the timer TMa generates a pulse Pa (viz., the 6V drop mode instructions) only if the signal B1 achieves and maintains a logic level "1" for a relatively long time duration (viz., 120 seconds). The reason for this is as follows.

Although an electric company usually supplies its consumers with a voltage higher than the contrast voltage (100V in this disclosure), it may be detrimental to consumers' devices if the apparatus is transferred to the 6V drop mode directly or in a short time after the signal B1 indicates a logic "1". Therefore, according to the present invention, the apparatus is permitted to be transferred to the 6V drop mode only if the signal B1 continues to assume a logic "1" for a period of 120 seconds (for example).

Furthermore, as above mentioned, the timer TMb issues a pulse Pb (logic level "1") only if the signal B2 achieves and maintains a logic "1" for a period of 2 seconds. Similarly, the timer TMc issues a pulse Pc only if the signal B3 achieves and maintains a logic "1" for a period of 2 seconds. Generally speaking, it is preferable to instantly transfer the operations of the apparatus to the 3V drop mode if the input voltage V_{RN} drops to 102V. Similarly, it is preferable to instantly transfer the operations of the apparatus to the direct-couple mode if the input voltage V_{RN} drops to 100V. However, the input voltage V_{RN} is undesirably, temporarily (for example 20ms-50ms) lowered due to the falling of a thunderbolt or due to "power on" of a heavy load appliance(s). Therefore, the timers TMb and TMc are provided such as to prevent the apparatus from being directly shifted to the corresponding modes in response to the above mentioned phenomenon which lasts for a very short time duration.

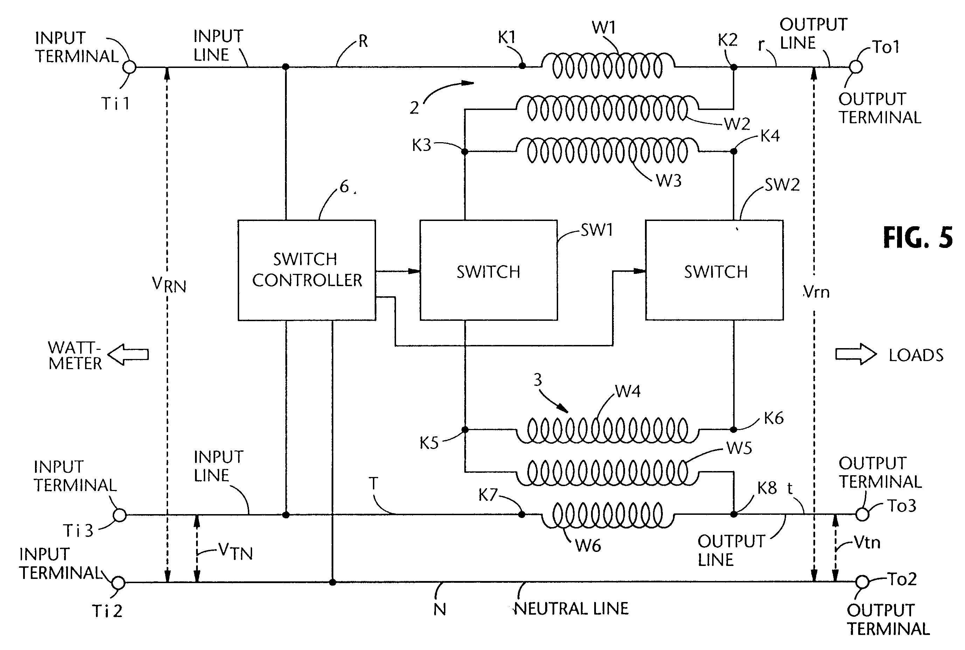

A second embodiment of the present invention will be discussed with reference to Figs. 5-7.

As shown in Fig. 5, the second embodiment is applied to a three-wire, single-phase consumer's power line.

For the convenience of description, the components shown in Fig. 5, which corresponds to the counterparts of Fig. 1, are depicted by like numerals. However, a switch controller of the second embodiment is configured such as to meet the application to the three-wire, single-phase power line and thus, the switch controller of Fig. 5 is denoted by numeral 6.

The arrangement of Fig. 5 differs from that of Fig. 1 in that the former arrangement further includes a continuous winding 3, and an input line T and an output line t. The continuous winding 3 is tapped at junctions K5 and K8, and includes three winding portions W4, W5 and W6 which are coupled in series. One end of the winding portion W6 has two ends K7 and K8 which are respectively coupled to an input terminal Ti3 and an output terminal To3.

As in the first embodiment, the number of turns of the winding portion W1 is 7 (seven) while the number of turns of each of the winding portions W2 and W3 is 117. The winding portions W4, W5 and W6 correspond to W3, W2 and W1, respectively, and thus, the number of turns of the winding portion W6 is 7 (seven) while the number of turns of each of the winding portions W4 and W5 is 117.

In the second embodiment, the switch SW1 is coupled between the junctions K3 and K5 while the switch SW2 is coupled between the junction K4 and one end K6 of the winding portion W4.

The principle underlying the second embodiment is essentially the same of the first embodiment.

In order to discuss the second embodiment as in the first embodiment, it is assumed that a nominal voltage (viz., contract voltage) of each of input voltages V_{RN} and V_{TN} is 100V. Therefore, a nominal voltage applied to the input terminal Ti1 and Ti3 is 200V (= 2≦100V). A power consumer couples his or her appliance to the output terminals To1-To2 or To3-To2 if the appliance has a rated voltage of 100V. On the other hand, if the consumer's device has a rated voltage of 200V, it is connected to the output terminal To1-To3.

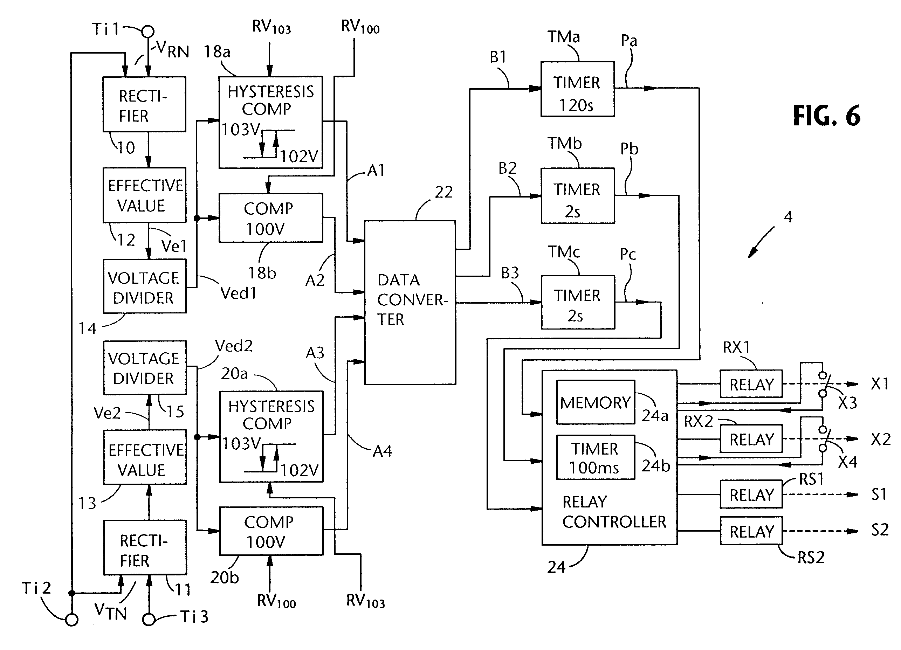

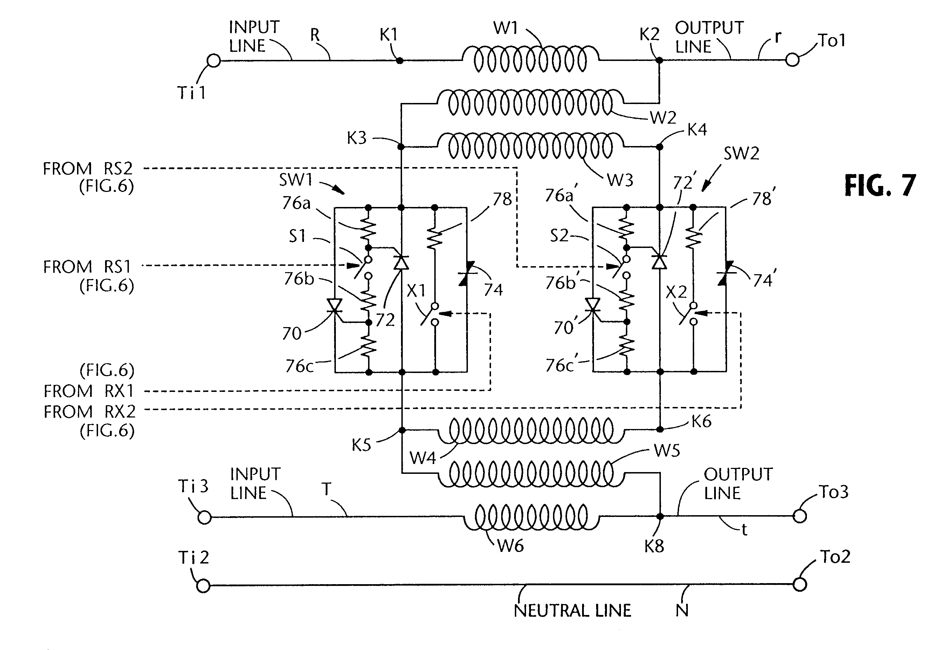

Fig. 6 is a block diagram showing in detail the arrangement of the switch controller 6 (Fig. 5).

The arrangement of Fig. 6 differs from that of Fig. 2 in that the former arrangement further includes a rectifier 11, an effective value determiner 13, a voltage divider 15, a hysteresis comparator 20a and a comparator 20b. Other than this, the arrangement of Fig. 6 is essentially the same as that of Fig. 2. The above mentioned blocks 11, 13, 15, 20a and 20b operate in exactly the same manner as the counterparts 10, 12, 14, 18a and 18b, respectively.

However, it should be noted that: (a) the rectifier 11 is arranged to rectify the input voltage V_{TN}, (b) the outputs of the effective value determiners 12 and 13 are respectively depicted by Ve1 and Ve2, (c) the outputs of the voltage dividers 14 and 15 are respectively depicted by Ved1 and Ved2 and (d) the data converter 22 of Fig. 6 is supplied with outputs A3 and A4 of the comparators 20a and 20b besides the outputs A1 and A2, as compared with the arrangement of Fig. 2.

The discussion of the blocks 11, 13, 15, 20a and 20b is deemed redundant and accordingly will be omitted for merely the sake of simplifying the disclosure.

As mentioned above, there are three possible combinations (1)-(3) with respect to the outputs A1 and A2, as listed below.

| | (1) | (2) | (3) |
|---|---|---|---|
| A1 | 1 | 0 | 0 |
| A2 | 1 | 1 | 0 |

In a similar manner, there are three possible combinations (4)-(6) with respect to the outputs A3 and A4, as listed below.

| | (4) | (5) | (6) |
|---|---|---|---|
| A3 | 1 | 0 | 0 |
| A4 | 1 | 1 | 0 |

As a result, 9 (nine) possible combinations (a)-(i) can be obtained from the four outputs A1-A4 applied to the data controller 22. That is,

| | (a) | (b) | (c) | (d) | (e) | (f) | (g) | (h) | (i) |
|---|---|---|---|---|---|---|---|---|---|
| A1 | 1 | 1 | 1 | 0 | 0 | 0 | 0 | 0 | 0 |
| A2 | 1 | 1 | 1 | 1 | 1 | 1 | 0 | 0 | 0 |
| A3 | 1 | 0 | 0 | 1 | 0 | 0 | 1 | 0 | 0 |
| A4 | 1 | 1 | 0 | 1 | 1 | 0 | 1 | 1 | 9 |

The data converter 22 of Fig. 6 produces three logic signals B1, B2 and B3 which are respectively applied to timers TMa, TMb and TMc. If the converter 22 receives the above mentioned logic level combination (a), then
B1 = 1
B2 = 0
B3 = 0
On the other hand, if the converter 22 receives one of the logic level combinations (b),(d) and (e), then
B1 = 0
B2 = 1
B3 = 0
Further, if the converter 22 receives one of the logic level combinations (c), (f), (g), (h) and (i), then
B1 = 0
B2 = 0
B3 = 1
The operations how to control the switches SW1 and SW2 using the signals B1-B3 are exactly the same as in the first embodiment. Accordingly, the detailed discussion of the switch control operations will not be given for the sake of simplifying the disclosure.

Fig. 7 is a diagram showing the details of the switches SW1 and SW2 (Fig. 5) and corresponds to Fig. 5 except that the switch controller 6 is omitted in Fig. 7. The switches SW1 and SW2 of Fig. 7 are respectively identical with SW1 and SW2 of Fig. 3.

It is readily appreciated from the foregoing that what combination of the input voltages V_{RN} and V_{TN} closes the switch SW1 and/or the switch SW2 and what combination of the input voltages V_{RN} and V_{TN} opens SW1 and/or SW2.

It is also understood that if each of the output voltages Vrn and Vtn is lowered by 6V, the output voltage appearing at the terminals To1 adn To3 is lowered by 12V (=6V+6V). As a further example, if the output voltages Vrn and Vtn are respectively lowered by 3V and 6V, the output voltage appearing at the terminals To1 and To3 is lowered by 9V (=3V+6V).

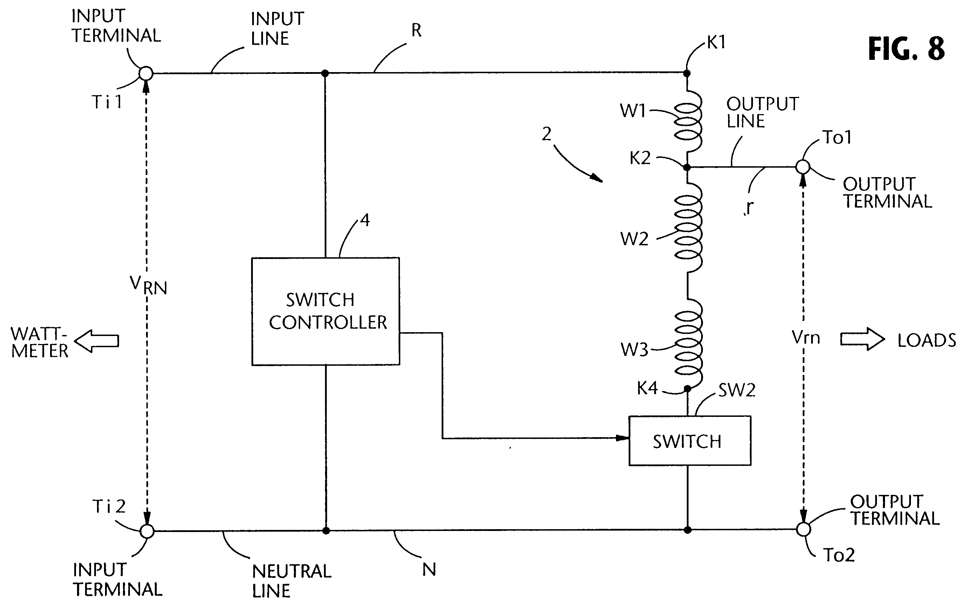

Fig. 8 is a block diagram showing a third embodiment of the present invention. The arrangement of Fig. 8 is identical to that of Fig. 1 except that the former arrangement is not provided with the switch SW1 as compared with Fig. 1. The third embodiment is preferable if it is sufficient to control whether or not the autotransformer is inserted in the power line. It will be readily appreciated that the switch controller 4 should be modified to control only one switch SW2. Such modification can be made without any difficulty from the foregoing. It goes without saying that the third embodiment is applicable to the single-phase, three-wire consumer's power line.

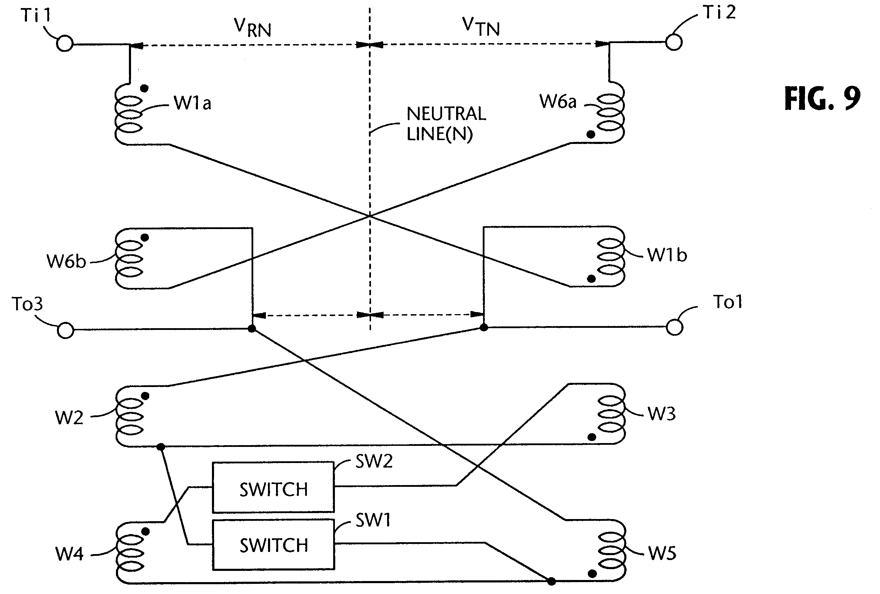

Fig. 9 is a diagram schematically showing a fourth embodiment of the present invention. The fourth embodiment is concerned with connections of the winding portions W1-W6 shown in the second embodiment.

In Fig. 9, the winding portion W1 is divided into two portions W1a and W1b while the winding portion W6 is divided into two portions W6a and W6b. A core on which the windings are wound is not shown. Further, the neutral line N is denoted by a broken line.

The connection of the windings shown in Fig. 9 is well suited for essentially equalizing or balancing the input voltages V_{RN} and V_{TN} if these input voltages are rendered unbalanced due to equilibrium of the loads connected to the output terminals To1-To2 and To3-To2 of the autotransformer shown in Fig. 5.

In Fig. 9, a dot marking indicates the beginning of the winding. The winding portions W1a and W1b are wound on the core in a manner that the winding directions of W1a and W1b are opposite or different each other. In a similar manner, the winding portions W6a and W6b are wound on the core such that the winding directions of W1a and W1b are opposite each other. Similarly, the winding portions W2 and W3 are wound in opposite directions while the winding portions W4 and W5 are wound in opposite directions.

According to the arrangement shown in Fig. 9, even if the input voltage V_{RN} and V_{TN} becomes respectively 106V and 101V (for example) due to unbalanced loads, each of the input voltages is eventually converged to about 103.5V in a very short time. Therefore, let us consider the undesirable case where the input voltage V_{RN} and V_{TN} remains respectively 106V and 101V. If the fourth embodiment is not employed, the apparatus continues to be in the 3V drop mode in the instant case. However, according to the fourth embodiment, each of the input voltages V_{RN} and V_{TN} is converged to 103.5V and thus, the apparatus can be transferred to the 6V drop mode. This means that effective power saving can be achieved.

If the output of the autotransformer should be controlled such that the output thereof should be changed in four different steps, three switches must be provided. In this case, the secondary winding has to be divided into three portions.

The present invention has been discussed in connection with the single-phase, two-wire consumer's power line (first and third embodiments) and also the single-phase, three-line consumer's power line (second embodiment). However, it is readily appreciated that the present invention can be extended to a three-phase, four-wire power line, etc.

In the first embodiment, the number of turns of each of the winding portions W2 and W3 are made equal each other. However, it is within the scope of the present invention to differ the winding ratio of W2 and W3 in order to change the sizes of the voltage step-down. This modification is also applicable to the second and third embodiments.

While the foregoing description describes four preferred embodiments of present invention, the various alternatives and modifications possible without departing from the scope of the present invention, which is limited only by the appended claims, will be apparent to those skilled in the art.

## Claims

1. A method of controlling an output voltage of a step-down autotransformer in response to an input voltage applied thereto, comprising the steps of:
detecting said input-voltage which is applied to a primary winding of said step-down autotransformer;
comparing said input voltage with a reference voltage and outputting a comparison result; and
controlling a switch in response to said comparison result, said switch being arranged such as to render said step-down autotransformer inoperative if said switch is open, whereby said output voltage is controlled in response to said input voltage.

2. A method of controlling a step-down ratio of an autotransformer in response to an input voltage applied thereto, comprising the steps of:
detecting said input voltage applied to a primary winding of said autotransformer;
comparing said input voltage with first and second reference voltages and outputting first and second comparison results; and
controlling first and second switches in response to said first and second comparison results, said first switch being coupled to a given winding point of a secondary winding of said autotransformer, said second switch being coupled to a remote end of said secondary winding with respect to said primary winding.

3. A method of conserving electrical power, comprising the steps of:
interposing a step-down autotransformer between a source of voltage and a load;
detecting the voltage from said source;
varying an output voltage of said step-down autotransformer in response to the detected voltage; and
preventing the output voltage of said step-down autotransformer from falling below a predetermined voltage.

4. A method as claimed in claim 1, 2 or 3, wherein said autotransformer is provided in a single-phase, two-wire power line.

5. A method as claimed in claim 1, 2 or 3, wherein said autotransformer is provided in a single-phase, three-wire power line.

6. An apparatus of conserving electrical power, comprising:
a step-down autotransformer having a primary winding for receiving an input voltage from a voltage source and having a secondary winding coupled to a load;
a switch controller, said switch controller detecting said input voltage and comparing said input voltage with a reference voltage; and
a switch controlled by said switch controller, said switch being open such as to render said step-down autotransformer inoperative if said input voltage falls below said reference voltage.

7. An apparatus of conserving electrical power, comprising:
a step-down autotransformer having a primary winding for receiving an input voltage from a voltage source and having a secondary winding coupled to a load;
a switch controller, said switch controller detecting said input voltage and comparing said input voltage with first and second reference voltages; and
a first switch coupled to a given point included in said secondary winding, said first switch being controlled by said switch controller such as to selectively electrically inserting one portion of said secondary winding into said step-down transformer; and
a second switch coupled to a remote end of said secondary winding with respect to said primary winding, said second switch selectively electrically inserting the other portion of said secondary winding into said step-down transformer.

8. An apparatus as claimed in claim 6 or 7, wherein said autotransformer is provided in a single-phase, two-wire power line.

9. An apparatus as claimed in claim 6 or 7, wherein said autotransformer is provided in a single-phase, three-wire power line.
